# DEMANDE DE BREVET EUROPEEN

(11) **EP 1 560 183 A1**
(43) Date de publication de la demande: **03.08.2005**
(21) Numéro de dépôt: 05290145.1
(22) Date de dépôt: 24.01.2005
(51) Int. Cl.: G08B 13/24, G01V 3/10, G07C 9/00

(54) **Système de détection du sens de passage d'un objet à une zone frontière déterminée**

(30) Priorité: 30.01.2004 FR 0400937
(71) Demandeur: NEOPOST INDUSTRIE, F-92220 Bagneux (FR)
(72) Inventeur: Venture, Guy, 13560 Senas (FR); Lievre, Jérôme, 78670 Villennes sur Seine (FR)
(74) Mandataire: Joly, Jean-Jacques

(57) **Abrégé**

L'invention concerne un véhicule de transport de marchandises comportant un système de détection du sens de passage d'un objet à une porte de chargement/déchargement de ce véhicule, le système de détection comprenant :
- un premier élément de lecture-interrogation (16) comportant une première antenne (16a) ayant un premier lobe de détection (16b), le premier élément de lecture-interrogation surveillant une première région (20a) située d'un coté de cette porte de chargement/déchargement,
- un second élément de lecture-interrogation (18) comportant une seconde antenne (18a) ayant un second lobe de détection (18b) ne recouvrant pas le premier lobe de détection, le second élément de lecture-interrogation surveillant une seconde région (20b) située de l'autre coté de cette porte de chargement/déchargement, et
- des moyens de traitement (22) reliés aux premier et second éléments de lecture-interrogation, les moyens de traitement déterminant le sens de passage de l'objet en fonction de l'ordre de franchissement de ces deux régions.

## Description

La présente invention se rapporte au domaine du traitement de paquets, colis ou palettes et du transport logistique.

### Art antérieur

Le recours à la technologie RFID (radio frequency identification device) est bien connu en logistique pour suivre, identifier, les colis et pour traiter les informations relatives à toutes les opérations, prestations et services en jeu durant toute la chaîne de transport.

Or, il se trouve que le problème essentiel de savoir si un colis se trouve à l'intérieur ou à l'extérieur d'un espace précis, comme un véhicule, dont il a franchi le seuil n'a pas encore été soulevé.

Or, ce problème se pose fréquemment dans le domaine de la logistique du transport où nombre de colis sont égarés ou soustraits frauduleusement.

### Objet et résumé de l'invention

La présente invention a donc pour objet de résoudre le problème précité en proposant un système de détection du passage d'un objet au niveau d'une zone frontière déterminée qui garantisse que cet objet soit d'un coté ou de l'autre de cette frontière.

A cet effet, elle propose un véhicule de transport de marchandises comportant un système de détection du sens de passage d'un objet à une porte de chargement/déchargement de ce véhicule, caractérisé en ce que le système comprend :
- un premier élément de lecture-interrogation comportant une première antenne ayant un premier lobe de détection, le premier élément de lecture-interrogation surveillant une première région située d'un coté de ladite porte de chargement/déchargment,
- un second élément de lecture-interrogation comportant une seconde antenne ayant un second lobe de détection ne recouvrant pas le premier lobe de détection, le second élément de lecture-interrogation surveillant une seconde région située de l'autre coté de ladite porte de chargement/déchargement, et
- des moyens de traitement reliés aux premier et second éléments de lecture-interrogation, les moyens de traitement déterminant le sens de passage de l'objet en fonction de l'ordre de franchissement de ces deux régions.

Ainsi, le premier élément de lecture-interrogation surveillera un espace situé d'un coté de la porte de chargement/déchargement et le second élément de lecture-interrogation surveillera l'espace situé de l'autre coté, le sens de passage étant déterminé par l'ordre de franchissement de ces deux espaces encadrant la porte du véhicule. Ce système permet ainsi de résoudre le problème des dévoyés avec un suivi de chaque objet qui peut être un colis ou une palette.

Avantageusement, les moyens de traitement déterminent en outre des données d'identification relatives à l'objet.

Selon une particularité de l'invention, le système de détection comporte des moyens de communication sans fil pour transmettre les données d'identification et des données relatives au sens de passage de l'objet vers des moyens de gestion extérieur au véhicule.

Selon une particularité de l'invention, le système de détection comporte des moyens de communication filaire pour transmettre les données d'identification et des données relatives au sens de passage de l'objet vers des moyens de gestion extérieur au véhicule et la transmission des données entre les moyens de communication filaire et les moyens de gestion se fait à travers un réseau local auquel le véhicule est relié.

Avantageusement, le système de détection comporte des moyens indicateurs sonores et/ou lumineux.

### Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :
- la figure 1 illustre très schématiquement un système de détection du sens de passage d'un objet à une zone frontière de passage selon l'invention ;
- la figure 2 illustre très schématiquement un local comportant une pluralité de systèmes de détection selon la figure 1 ; et
- la figure 3 illustre très schématiquement un véhicule de transport de marchandises comportant un système de détection selon la figure 1.

### Description détaillée de modes de réalisation

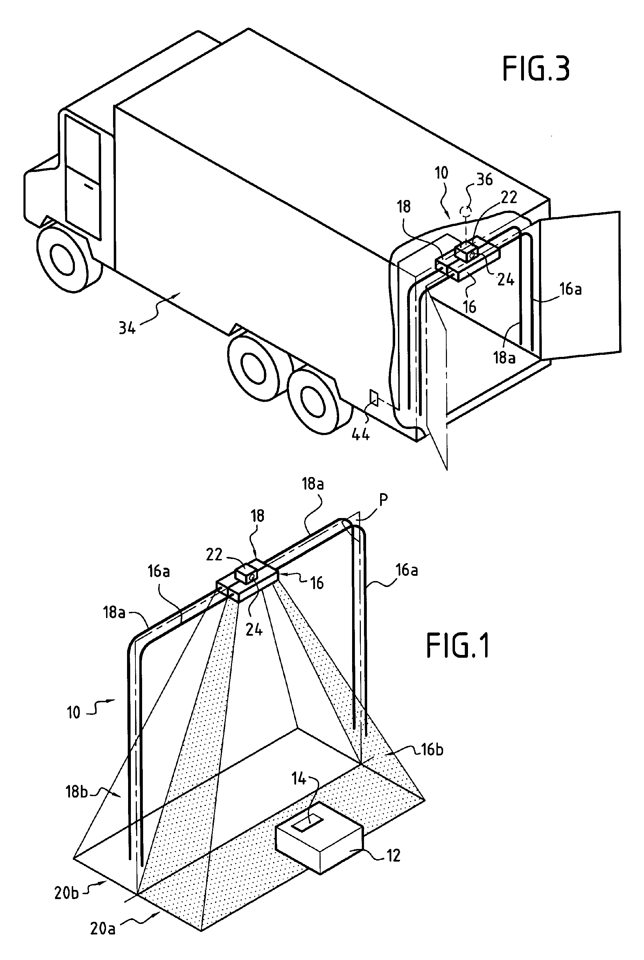

Conformément à l'invention, la figure 1 illustre un système de détection 10 du sens de passage d'un objet 12 à une zone frontière de passage entre deux espaces distincts. L'objet 12 par exemple, un colis ou paquet, comprend un moyen d'identification électronique ou indicateur RFID 14 (RFID Tag).

Le système de détection 10 comporte un premier élément 16 de lecture-interrogation comportant une première antenne 16a et un second élément 18 de lecture-interrogation comportant une seconde antenne 18a. Chacune des deux antennes 16a, 18a peut être en forme de boucle.

Les deux éléments de lecture-interrogation 16, 18 peuvent être accolés ou séparés en fonction de la configuration de la zone frontière de passage. La première antenne 16a du premier élément 16 de lecture-interrogation définit un premier lobe de détection 16b, et la seconde antenne 18a du second élément 18 de lecture-interrogation définit un second lobe de détection 18b ne recouvrant pas le premier lobe de détection 16c. Tout au plus les deux lobes de détection 16b, 18b peuvent être juxtaposés selon un plan P séparant la zone frontière de passage en une première région 20a et une seconde région 20b.

Ainsi, le premier élément 16 de lecture-interrogation surveille la première région 20a située d'un coté de la zone frontière de passage et le second élément 18 de lecture-interrogation surveille la seconde région 20b située de l'autre coté de cette zone frontière de passage.

En outre, le système de détection 10 comporte des moyens de traitement 22 avantageusement à microprocesseur et comportant des moyens mémoire. Ces moyens de traitement 22 sont reliés aux premier et second éléments 16, 18 de lecture-interrogation afin de déterminer le sens de passage de l'objet 12 en fonction de l'ordre de franchissement des deux régions 20a, 20b situées des deux côtés de la zone frontière de passage.

Avec cette configuration double, c'est-à-dire une simple duplication d'un élément de lecture-interrogation conventionnel, positionné au niveau d'une zone de passage, il devient possible de déterminer très simplement le sens de passage de l'objet 12 ou d'une marchandise selon que la détection de son indicateur RFID 14 a été effectuée en premier par l'un ou l'autre des deux éléments de lecture-interrogation 16, 18. La séquence de détection de l'indicateur RFID 14 donnera ainsi l'ordre de franchissement des deux espaces encadrant la zone frontière de passage.

Bien entendu, les moyens de traitement 22 déterminent aussi des données d'identification relatives à l'objet 12, concernant par exemple la nature de l'objet, son poids, sa destination etc.

De plus, le système de détection 10 peut avantageusement comporter des moyens indicateurs 14 sonores et/ou lumineux présentant des informations concernant l'objet 12.

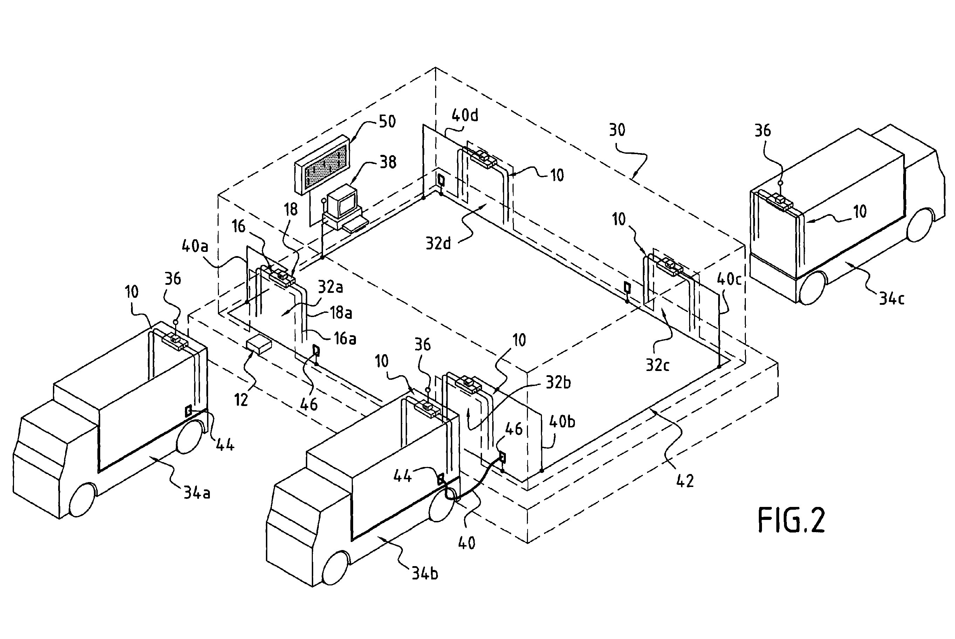

La figure 2 illustre un exemple de local 30 assurant le transit, ou dispatching d'objets 12 tels que des colis ou paquets en provenance de différentes destinations d'arrivée vers différentes destinations de départ.

Ce type de local se rencontre fréquemment dans les administrations postales ou chez les transporteurs privés tel que DHL™ ou UPS™.

Ce local 30 est muni de portiques (dits aussi portes à quai) d'entrée 32a, 32b pour l'entrée de marchandises dans le local 30 et de portiques de sortie 32c, 32d pour la sortie de ces mêmes marchandises. Les portiques d'entrée et/ou de sortie du local 30 définissent les zones frontières de passage.

Ces portiques vers lesquels sont dirigées les parties de déchargement, ou parties arrières, de camions de livraison ou véhicules de transport de marchandises 34a, 34b, 34c sont munis de systèmes de détection 10 pour détecter le sens de passage et l'identification des marchandises sous chacun des portiques précités.

Ainsi, chaque portique est muni de deux éléments de lecture-interrogation 16, 18 et leurs antennes associées 16a, 18a qui peuvent être disposées autours des portiques d'entrée et/ou de sortie du local 30. Les lobes de détection respectifs des antennes 16a, 18a ne se recouvrent pas, mais au contraire sont accolés au niveau de cette zone frontière de passage et sont orientés selon deux directions opposées, en l'espèce vers l'intérieur ou l'extérieur du local 30, la zone frontière étant constituée par le portique 32a à 32d.

Par ailleurs, le système de détection 10 comporte avantageusement des moyens de communication filaire 40a, 40b, 40c, 40d pour transmettre les données d'identification et les données relatives au sens de passage de l'objet 12 vers des moyens de gestion 38 distants, de type ordinateur, la transmission des données entre les moyens de communication filaire 40 et les moyens de gestion 38 se faisant à travers un réseau local 42. Ces moyens de gestion 38 peuvent eux mêmes être reliés à un centre serveur éloigné (non représenté) au travers d'un réseau de télécommunications, par exemple le réseau Internet. Ainsi, un opérateur au centre serveur éloigné pourra consulter toutes les informations relatives aux objets traversant le local.

Bien entendu, ses moyens de communication filaire pour transmettre les données précitées vers les moyens de gestion distants peuvent être remplacés par des moyens de communication sans fil, de type Bluetooth ou Wifi.

Les figures 2 et 3 montrent que le système de détection 10 peut aussi trouver place au niveau d'un véhicule de transport de marchandises 34. Selon cet exemple préférentiel, la zone frontière de passage est constituée d'une porte de chargement/déchargement du véhicule 34.

Dans ce cas, les antennes 16a, 18a des éléments de lecture-interrogation 16, 18 sont avantageusement incorporées à l'intérieur de la structure enveloppante du véhicule et peuvent être disposées autour de la porte de chargement/déchargement du véhicule 34.

Selon cet exemple préférentiel, les moyens de liaison filaire 40 peuvent être un câble électrique reliant une première prise 44 disposée dans le véhicule 34 à une seconde prise 46 disposée dans le local 30 permettant ainsi la transmission des informations recueillis au niveau du véhicule par le système de détection 10 vers les moyens de gestion 38. Toutefois, la transmission de ces informations vers les moyens de gestion 38 peut aussi être réalisée directement à travers de moyens de liaison sans fil 36 connectés aux moyens de traitement 22 du véhicule.

Par ailleurs, les moyens indicateurs 24 sonores ou lumineux disposés aux niveaux des portes de chargement/déchargement des véhicules 34 ou aux niveaux des portiques d'entrée et/ou de sortie du local 30 peuvent indiquer à un manutentionnaire le poste de chargement du véhicule correspondant au colis ou à la palette qu'il transporte par un signal sonore ou visuel de couleur. Toutefois, dans le cas du local précité ou d'une aire de transit où sont stationnés de nombreux véhicules en partance pour différentes destinations de livraison, il est préférable d'adjoindre à ces indicateurs sonores ou lumineux, un panneau d'affichage centralisé 50, indiquant le portique de sortie déterminé associé à un objet ayant préalablement franchi un portique d'entrée déterminé.

En effet, Les manutentionnaires qui déchargent les véhicules provenant de différents centres chargeurs doivent répartir les objets transportés, et un tel panneau d'affichage centralisé permet d'indiquer plus facilement aux manutentionnaires l'emplacement convenable à atteindre situé juste devant le véhicule à charger.

Une solution simple pour réaliser ce panneau d'affichage centralisé consiste à prévoir un écran de type LCD ou plasma avec une pluralité de lignes correspondant au nombre déterminé de portiques d'entrée (déchargement des véhicules), et une pluralité de colonnes correspondant au nombre déterminé de portiques de sortie (chargement des véhicules). Bien entendu, plusieurs personnes peuvent décharger ou charger le même véhicule en utilisant des portiques différents.

En cas d'erreur d'aiguillage, une alarme sonore et/ou visuelle peut alors se déclencher au niveau de l'indicateur sonore ou lumineux du portique de sortie concerné. Une couleur spécifique peut en outre être affectée à chaque portique d'entrée comme à chaque portique de sortie.

## Revendications

1. Véhicule de transport de marchandises comportant un système de détection du sens de passage d'un objet à une porte de chargement/déchargement de ce véhicule, **caractérisé en ce que** le système comprend :
- un premier élément de lecture-interrogation (16) comportant une première antenne (16a) ayant un premier lobe de détection (16b), le premier élément de lecture-interrogation surveillant une première région (20a) située d'un côté de ladite porte de chargement/déchargment,
- un second élément de lecture-interrogation (18) comportant une seconde antenne (18a) ayant un second lobe de détection (18b) ne recouvrant pas le premier lobe de détection, le second élément de lecture-interrogation surveillant une seconde région (20b) située de l'autre coté de ladite porte de chargement/déchargement, et
- des moyens de traitement (22) reliés aux premier et second éléments de lecture-interrogation, les moyens de traitement déterminant le sens de passage de l'objet en fonction de l'ordre de franchissement de ces deux régions.

2. Véhicule de transport selon la revendication 1, **caractérisé en ce que** les moyens de traitement déterminent en outre des données d'identification relatives à l'objet.

3. Véhicule de transport selon l'une quelconque des revendications 1 et 2, **caractérisé en ce que** le système de détection comporte en outre des moyens de communication sans fil (36) pour transmettre les données d'identification et des données relatives au sens de passage de l'objet vers des moyens de gestion (38) extérieur au véhicule.

4. Véhicule de transport selon l'une quelconque des revendications 1 et 2, **caractérisé en ce que** le système de détection comporte en outre des moyens de communication filaire (40) pour transmettre les données d'identification et des données relatives au sens de passage de l'objet vers des moyens de gestion (38) extérieur au véhicule.

5. Véhicule de transport selon l'une quelconque des revendications 1 à 4, **caractérisé en ce que** le système de détection comporte en outre des moyens indicateurs sonores et/ou lumineux (24).

6. Véhicule de transport selon la revendication 4, **caractérisé en ce que** la transmission des données entre les moyens de communication filaire (40) et les moyens de gestion (38) se fait à travers un réseau local (42) auquel le véhicule est relié.
